# EUROPÄISCHE PATENTSCHRIFT

(11) **EP 0 681 593 B1**
(45) Veröffentlichungstag und Bekanntmachung des Hinweises auf die Patenterteilung: **21.08.1996**
(21) Anmeldenummer: 94906160.0
(22) Anmeldetag: 27.01.1994
(51) Int. Cl.: C08F 291/06, C08F 4/34

(54) **PFROPF- UND CORE-SHELL-COPOLYMERISATE MIT VERBESSERTER PHASENANBINDUNG ZWISCHEN PFROPFGRUNDLAGE UND AUFGEPFROPFTER POLYMERPHASE**
GRAFT- AND CORE-SHELL-COPOLYMERS WITH AN IMPROVED PHASE BOND BETWEEN GRAFT BASE AND GRAFTED POLYMER PHASE
COPOLYMERISATS GREFFES ET CAPSULES A LIAISON DE PHASE AMELIOREE ENTRE LA BASE DE GREFFAGE ET LA PHASE POLYMERE GREFFEE

(30) Priorität: 29.01.1993 DE 4302552
(43) Veröffentlichungstag der Anmeldung: 15.11.1995
(73) Patentinhaber: Wacker-Chemie GmbH, D-81737 München (DE)
(72) Erfinder: KOHLHAMMER, Klaus, D-84533 Marktl (DE); DOBLER, Walter, D-84367 Tann (DE)
(74) Vertreter: Schuderer, Michael
(86) Internationale Anmeldenummer: EP9400230
(87) Internationale Veröffentlichungsnummer: WO9417114

(56) Entgegenhaltungen:
- EP-A- 0 434 362
- DE-A- 3 524 370

## Beschreibung

Die Erfindung betrifft Pfropf- und Core-Shell-Copolymerisate mit verbesserter Phasenanbindung zwischen Pfropfgrundlage und aufgepfropfter Polymerphase, diesen zugrundeliegende peroxygruppenhaltige Copolymerisate sowie Verfahren zur Herstellung der genannten Polymerisate.

Copolymerisierbare Initiatoren bieten interessante Möglichkeiten bei der Herstellung von neuen polymeren Materialien. Durch sie werden potentielle Radikalfunktionen in Polymerketten, den sogenannten "Makroinitiatoren", eingebracht, die bei der Herstellung von Pfropf- und Blockcopolymeren als definierte Ankergruppen fungieren. Ein Anwendungsgebiet ist beispielsweise die Phasenankopplung von unverträglichen Polymeren in Core-Shell-Latices bei deren Herstellung nach dem Emulsionspolymerisationsverfahren.

Ausgehend von einem Makroinitiator werden bei Pfropfreaktionen weitere Monomere radikalisch polymerisiert, die aufgrund der im Makroinitiator einpolymerisierten Peroxidgruppen fest mit dem Polymerrückgrat der Pfropfbasis verankert sein sollten. Alle Makroinitiatoren, die bisher in der Literatur bekannt sind, leiden unter dem Nachteil, daß ein Teil aller bei der Thermolyse der Peroxidfunktionen entstehenden Radikale nicht kovalent an das Polymerrückgrat gebunden ist. Dadurch entsteht gewöhnlich immer noch eine beträchtliche Menge an ungepfropften Polymerketten ohne intensive Bindung zur Pfropfbasis.

Peroxycarbonate mit allylischer Doppelbindung und deren Verwendung als Comonomere bei der Copolymerisation mit weiteren ethylenisch ungesättigten Monomeren werden in der DE-OS 27 26 008 beschrieben. Die DE-PS 34 20 048 betrifft Copolymerisate von Vinylacetat und Peroxyallylcarbonaten und deren Verwendung als Schlichtemittel für Glasfasern. Nachteilig ist, daß diese allylfunktionellen Peroxycarbonate, wenn überhaupt, nur sehr zögerlich mit anderen Vinylmonomeren copolymerisieren.

In der EP-A 277 608 (US-A 4,879,347) und der EP-A 279 430 (US-A 4,839,432) werden copolymerisierbare Peroxycarbonate mit (Meth)acrylat- und Allylether-Funktion als Comonomere zur Verbesserung der Phasenanbindung bei der Herstellung von Polymerblends beschrieben. Dabei wird das Peroxycarbonat mit Vinylmonomeren in Gegenwart eines Ethylencopolymeren im Sus-pensionspolymerisationsverfahren polymerisiert. Bei Erhitzen des Gemisches erfolgt die Kopplung der beiden Polymerphasen über die Peroxyfunktionen. Ein zur EP-A 279 430 analoges Vorgehen wird in der US-A 4,923,956 beschrieben, mit dem Unterschied, daß Propylenpolymerisate statt der Ethylen-Polymere eingesetzt werden. Die EP-A 307 802 betrifft Mischungen aus Polypropylen, einem weiteren Polymer und einem Copolymerisat aus Vinylmonomer und einem Peroxycarbonat mit Allylether- oder (Meth)acrylat-Funktion, deren Phasenanbindung durch Erhitzen auf Temperaturen von 200 bis 3000C verbessert wird. In der EP-B 225 091 werden Allylether-substituierte Peroxydicarbonate als Initiatoren zur Herstellung von hochmolekularen, verzweigten VC-Polymerisaten beschrieben. Nachteilig bei den ebengenannten copolymerisierbaren Peroxyestern ist speziell bei den Allylverbindungen deren geringe Reaktivität bei der Copolymerisation mit anderen Vinylmonomeren. Weiter können die genannten Peroxyester erst ab Temperaturen von ≥ 130°C weitere Radikalreaktionen auslösen und sind damit für die Emulsionspolymerisation uninteressant.

Die bei W.C. Endstra, Kautschuk und Gummi, Kunststoffe 42(5), 414 (1989), diskutierte Peroxyverbindung auf Methylstyrolbasis hat den Nachteil, daß sie mit vielen Vinylmonomeren nicht copolymerisiert werden kann und thermisch erst ab Temperaturen von ≥ 160°C weitere Radikalreaktionen ausgelöst werden. Gleiches gilt für das tert.-Butylperoxy-(p-(-vinylbenzoyl)benzoat (I. Gupta, S.N. Gupta, D.C. Neckers, J. Polym. Sci.: Polym. Chem. Ed. 20, 147 (1982)), welches erst ab T ≥ 100°C thermisch weitere Radikalreaktionen auslöst und damit zur Pfropfung im Emulsionspolymerisationsverfahren nicht eingesetzt werden kann.

Copolymerisierbare Peroxidverbindungen auf der Basis von radikalisch copolymerisierbaren Allylverbindungen oder Fumarsäurederivaten werden von Yamamota Y. et al, Polymer 32, 19 (1991), beschrieben. Nachteilig bei diesen Verbindungen ist deren unbefriedigende Copolymerisierbarkeit mit Vinylestern; ferner liegen die Zerfallstemperaturen mit einer Halbwertszeit von 10 h häufig oberhalb der für die Emulsionspolymerisation kritischen Temperatur von 100°C.

Alle obengenannten Systeme haben den Nachteil, daß beim thermischen Zerfall der Peroxygruppen nur etwa die Hälfte aller entstehenden Radikale kovalent an die Polymerhauptkette gebunden werden. Die restlichen Radikale haben keine Bindung zum Polymerrückgrat des Makroinitiators (Pfropfbasis) und sind für eine effektive Pfropfreaktion von Nachteil.

Es bestand daher die Aufgabe Copolymere vcn ethylenisch ungesättigten Monomeren mit olefinisch ungesättigten Peroxyverbindungen zur Verfügung zu stellen, deren Peroxygruppen während der Copolymerisation erhalten bleiben und nach dem Einbau in das Copolymerisat bei Temperaturen ≤ 100°C weitere radikalische Polymerisationsreaktionen initiieren können und bei deren Zerfall alle entstehenden Radikale kovalent an die Polymerhauptkette gebunden werden. Weiter bestand die Aufgabe, Pfropf- und Core-Shell-Copolymerisate auf der Basis der peroxygruppenhaltigen Copolymerisate zur Verfügung zu stellen.

Ein Gegenstand der Erfindung sind Copolymerisate eines oder mehrerer Comonomere aus der Gruppe der (Meth)acrylsäureester von Alkoholen mit 1 bis 10 C-Atomen Vinylester von gesättigten aliphatischen Carbonsäuren mit 2 bis 10 C-Atomen, Olefine, Vinyl aromaten, Vinylhalogenide und/oder Vinylether mit olefinisch zweifach ungesättigten Diacylperoxiden der Formel 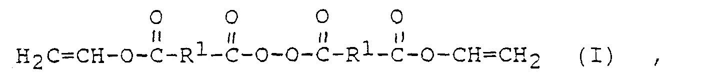 wobei R¹ für eine chemische Bindung oder für eine lineare oder verzweigte Alkylengruppe mit 1 bis 10 C-Atomen oder für eine Cycloalkylengruppe mit 3 bis 10 C-Atomen oder für einen zweiwertigen Rest einer aromatischen Verbindung mit 6 bis 14 C-Atomen steht.

Vorzugsweise steht R¹ für eine chemische Bindung, für einen Alkylenrest (CH₂)ₙ mit n = 1 bis 8, für einen Phenylenrest oder für CH=CH. Beispiele für bevorzugte Diacylperoxide sind Bis-(Monovinyl-oxaloyl)-peroxid (R¹ = chemische Bindung), Bis-(Monovinyl-malonoyl)-peroxid (R¹ = CH₂), Bis-(Monovinyl-succinoyl)-peroxid (R¹ = (CH₂)₂), Bis-(Monovinyl-glutaroyl)-peroxid (R¹ = (CH₂)₃), Bis-(Monovinyl-adipoyl)-peroxid (R¹ = (CH₂)₄), Bis-(Monovinyl-pimeloyl)-peroxid (R¹ = (CH₂)₅), Bis-(Monovinyl-suberoyl)-peroxid (R¹ = (CH₂)₆), Bis-(Monovinyl-azeloyl)-peroxid (R¹ = (CH₂)₇), Bis-(Monovinyl-sebazoyl)-peroxid (R¹ = (CH₂)₈), Bis-(Monovinyl-therephthaloyl)peroxid (R¹ = Phenylring), Bis-(Monovinyl-isophthaloyl)-peroxid (R¹ = Phenylring), Bis-(Monovinyl-maleinoyl)-peroxid (R¹ = CH=CH), Bis-(Monovinyl-fumaroyl)-peroxid (R¹ = CH=CH).

Besonders bevorzugt werden olefinisch zweifach ungesättigte Diacylperoxide der Formel
H₂C=CH-O-CO-(CH₂)ₙ-CO-O-O-CO-(CH₂)ₙ-CO-O-CH=CH₂ mit n = 1 bis 8.

Am meisten bevorzugt wird Bis-(Monovinyl-adipoyl)-peroxid.

Die Herstellung der Diacylperoxide der Formel (I) kann beispielsweise analog der Methode von F. G. Greene und J. Kazan, J. Org. Chem. 28, 2168 (1963), erfolgen. Dabei geht man von der entsprechenden Monovinylcarbonsäure der allgemeinen Formel HOOC-R¹-CO-O-CH=CH₂ oder deren Derivaten wie Anhydride oder Ester aus und setzt diese in Gegenwart von Dicyclohexylcarbodiimid mit Wasserstoffperoxid um. Monovinylcarbonsäuren sind beispielsweise durch Vinylierung der entsprechenden Dicarbonsäuren mit Vinylacetat zugänglich.

Die peroxidgruppenhaltigen Copolymerisate enthalten zwischen 0.01 bis 20 Gew.-% der olefinisch zweifach ungesättigten Peroxyverbindung und 80 bis 99.99 Gew.-% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether, wobei sich die Angaben in Gew.-% jeweils auf das Gesamtgewicht des Copolymerisats beziehen. Vorzugsweise beträgt der Gehalt an Peroxyverbindung 0.01 bis 10 Gew.-%, besonders bevorzugt zwischen 0.01 und 5 Gew.-%.

Bevorzugte Basismonomere sind aus der Gruppe der Methacrylsäureester oder Acrylsäureester von Alkoholen mit 1 bis 10 C-Atomen Methylmethacrylat, Methylacrylat, Ethylmethacrylat, Ethylacrylat, Isopropylmethacrylat, Isopropylacrylat, tert.-Butylacrylat, n-Butylacrylat und Ethylhexylacrylat; aus der Gruppe der Vinylester von gesättigten aliphatischen Carbonsäuren mit 2 bis 10 C-Atomen Vinylacetat, 1-Methylvinylacetat, Vinylpropionat, Vinyllaurat und Versaticsäure^{R}-Vinylester mit 9 bis 10 C-Atomen (Vinylester von gesättigten α-verzweigten Monocarbonsäuren, Handelsprodukt der Fa. Shell); aus der Gruppe der Olefine Ethylen, Propylen und 1,3-Butadien; aus der Gruppe der Vinylhalogenide Vinylchlorid und Styrol als bevorzugter Vinylaromat.

Gegebenenfalls können die erfindungsgemäßen Copolymerisate als Basismonomere noch bis zu 10 Gew.-%, bezogen auf das Copolymerisat, ethylenisch ungesättigte, funktionelle Comonomere enthalten. Beispiele hierfür sind Mono- oder Dicarbonsäuren wie Methacrylsäure, Acrylsäure oder Fumarsäure und deren Amide, hydroxyfunktionelle Monomere wie Hydroxyethylacrylat, 2-Hydroxypropylacrylat oder N-Methylolacrylamid, sulfonatfunktionelle Monomere wie Vinylsulfonat oder 2-Acrylamido-2-methyl-propansulfonat und mehrfach ungesättigte Monomere wie Divinyladipat.

Besonders bevorzugt sind Copolymerisate mit einem oder mehreren Comonomeren aus der Gruppe Vinylacetat, 1-Methylvinylacetat, Vinylpropionat, Vinyllaurat, Vinylchlorid und/oder Ethylen sowie einer oder mehrerer olefinisch ungesättigter Peroxyverbindungen der Formel
H₂C=CH-O-CO-(CH₂)ₙ-CO-O-O-CO-(CH₂)ₙ-CO-O-CH=CH₂ mit n = 1 bis 8.

Am meisten bevorzugt sind Copolymerisate enthaltend 0 bis 50 Gew,-% Ethylen, mindestens 50 Gew.-% Vinylacetat und 0.01 bis 5 Gew.-% Bis-(Monovinyl-adipoyl)-peroxid, wobei sich die Angaben in Gew.-% auf das Gesamtgewicht des Copolymerisats beziehen und sich auf 100 Gew.-% aufaddieren.

Die Peroxidgruppen enthaltenden Copolymerisate verhalten sich bei der Pfropfcopolymerisation als "Makroinitiatoren". Die freien Peroxidgruppen im Copolymerisat fungieren bei der Pfropfcopolymerisation als Ankergruppen und verbessern damit die Phasenanbindung unverträglicher Polymerphasen, beispielsweise in Core-Shell-Latices. Bei der Copolymerisation zur Herstellung der peroxidhaltigen Copolymerisate müssen die Reaktionsbedingungen allerdings so gewählt werden, daß die Peroxid-Bindung nicht aufgebrochen wird.

Die peroxygruppenhaltigen Copolymerisate werden durch Polymerisation in Masse, in Lösung, in Suspension oder in Emulsion hergestellt. Von den genannten Verfahren ist die Emulsionspolymerisation die bevorzugte Variante. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage, durchgeführt werden. Alle Dosierungen erfolgen vorzugsweise im Maße des Verbrauchs der jeweiligen Komponente.

Bei der Copolymerisation dürfen die Peroxidbindungen nicht zerstört werden. Aufgrund deren Thermolabilität müssen daher möglichst niedrige Reaktionstemperaturen eingehalten werden. Die Polymerisation wird deshalb in einem Temperaturbereich von 0 bis 50°C, vorzugsweise 0 bis 40°C, initiiert, da bei höherer Temperatur ein nennenswerter Zerfall der Peroxygruppen im Copolymerisat auftritt.

Der Start der Polymerisationsreaktion erfolgt vorzugsweise durch radikalische Initiierung. Um bei niedrigen Temperaturen initiieren zu können, wird die Initiierung in Redox-Fahrweise durchgeführt. Zur Verhinderung des Abreagierens der olefinisch ungesättigten Peroxide mit der reduzierenden Komponente des Redoxinitiator-Systems werden zum Radikalstart wasserlösliche Peroxide mit möglichst hohem Oxidationspotential, bevorzugt in leichtem molaren Überschuß, insbesonders im molaren Verhältnis von 1 : 0.9 bis 1 : 0.8, zur Reduktionskomponente eingesetzt.

Bei der bevorzugten Emulsionspolymerisation erfolgt die Initiierung vorzugsweise mittels geeigneter wasserlöslicher Radikalbildner, die vorzugsweise in Mengen von 0.01 bis 3.0 Gew.-%, bezogen auf das Gesamtgewicht der Monomeren, eingesetzt werden. Beispiele hierfür sind Ammonium- und Kaliumpersulfat, -peroxodisulfat cder Wasserstoffperoxid. Als Reduktionsmittel eignen sich die in solchen Polymerisationsverfahren üblichen Systeme, wie sie in Houben-Weyl Band 14/1, Seiten 263-297, aufgeführt sind, beispielsweise Natriumformaldehydsulfoxylat, Natriumsulfit, Natriumhydrogensulfit, Dithionit oder Ascorbinsäure.

Als Dispergiermittel können alle üblicherweise bei der Emulsionspolymerisation verwendeten Emulgatoren und Schutzkolloide eingesetzt werden. Vorzugsweise werden 1 bis 6 Gew.-%, be-zogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide, vorzugsweise in Mengen bis zu 15 Gew.-%, bezogen auf das Gesamtgewicht der Monomeren, eingesetzt werden. Beispiele hierfür sind Vinylalkohol/Vinylacetat-Copolymere mit einem Gehalt von 80 bis 100 Mol% Vinylalkoholeinheiten, Polyvinylpyrrolidone mit einem Molekulargewicht von 5000 bis 400000, Hydroxyethylcellulosen mit einem Substitutionsgradbereich von 1.5 bis 3.

Der für die Polymerisation gewünschte pH-Bereich,. der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Die peroxidhaltigen Copolymerisate (Makroinitiatoren) eignen sich zur Auslösung weiterer radikalischer Kettenreaktionen in einem zweiten Reaktionsschritt durch thermische Initiierung. Beispiele sind die Herstellung von Pfropfcopolymerisaten, insbesonders von Core-Shell-Dispersionsteilchen mit verbesserter Phasenanbindung zwischen den Polymerphasen durch Umsetzung der Makroinitiatoren mit weiteren Monomeren.

Dabei kommt es zur Aufspaltung der peroxidischen Bindungen im Makroinitiator und zur Bildung neuer Polymerabschnitte.

Ein weiterer Gegenstand der Erfindung sind Pfropf- und Core-Shell-Copolymerisate, hergestellt aus einer peroxygruppenhaltigen Polymerphase a), welche 0.01 bis 20 Gew.-% einer olefinisch zweifach ungesättigten Peroxyverbindung der Formel H₂C=CH-O-CO-R¹-CO-O-O-CO-R¹-CO-O-CH=CH₂, wobei R¹ für eine chemische Bindung oder für eine lineare oder verzweigte Alkylengruppe mit 1 bis 10 C-Atomen oder für eine Cycloalkylengruppe mit 3 bis 10 C-Atomen oder für einen zweiwertigen Rest einer aromatischen Verbindung mit 6 bis 14 C-Atomen steht,
und 80 bis 99.99 Gew.-% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether, enthält und
einer darauf aufgepfropften Polymerphase b), die durch Aufpfropfen eines oder mehrerer Monomere aus der Gruppe (Meth)acrylsäureester von Alkoholen mit 1 bis 10 C-Atomen, Vinylester von gesättigten aliphatischen Carbonsäuren mit 2 bis 10 C-Atomen, Olefine, Vinylhalogenide und Styrol sowie Styrolderivate, auf die peroxygruppenhaltige Polymerphase a) erhalten wird, wobei die Pfropf- und Core-Shell-Copolymerisate 1 bis 99 Gew.-% an Polymerphase b), bezogen auf das Gesamtgewicht der Pfropf- und Core-Shell-Copolymerisate,enthalten.

Bevorzugte Monomere der Polymerphase b) aus der Gruppe (Meth)acrylsäureester von Alkoholen mit 1 bis 10 C-Atomen sind Methylmethacrylat, Methylacrylat, Ethylmethacrylat, Ethylacrylat, Isopropylmethacrylat, Isopropylacrylat, t-Butylacrylat, n-Butylacrylat und Ethylhexylacrylat. Bevorzugte Vinylester von gesättigten aliphatischen Carbonsäuren mit 2 bis 10 C-Atomen sind Vinylacetat, Vinylpropionat und Vinyllaurat. Bevorzugte Olefine sind Ethylen und Propylen. Als Vinylhalogenid wird Vinylchlorid bevorzugt eingesetzt. Besonders bevorzugt sind Styrol und Methylmethacrylat. Darüber hinaus kann die Polymerphase b) gegebenenfalls noch bis zu 10 Gew.-%, bezogen auf das Gesamtgewicht der Polymerphase b), der bereits genannten ethylenisch ungesättigten, funktionellen Comonomere enthalten.

Bevorzugte Pfropf- und Core-Shell-Copolymerisate sind solche, hergestellt aus einer peroxygruppenhaltigen Polymerphase a) enthaltend ein oder mehrere Comonomere aus der Gruppe Vinylacetat, 1-Methyivinylacetat, Vinylpropionat, Vinyllaurat, Vinylchlorid und/oder Ethylen und 0.01 bis 10 Gew.-% einer oder mehrerer olefinisch zweifach ungesättigter Peroxyverbindungen der Formel
H₂C=CH-O-CO-(CH₂)ₙ-CO-O-O-CO-(CH₂)ₙ-CO-O-CH=CH₂ mit n = 1 bis 8 und einer aufgepfropften Polymerphase b) enthaltend (Meth)-acrylsäureester von Alkoholen mit 1 bis 10 C-Atomen, Vinvihalogeniden, Styrol und/oder Styrolderivaten,

Besonders bevorzugt sind Pfropf- und Core-Shell-Copolymerisate, hergestellt aus einer peroxygruppenhaltigen Polymerphase a), welche 0 bis 50 Gew.-% Ethylen, mindestens 50 Gew.-% Vinylacetat und 0.01 bis 5 Gew.-% Bis-(Monovinyladipoyl)-peroxid enthält, und einer aufgepfropften Polymerphase b), welche Styrol oder Methylmethacrylat enthält.

Die Umsetzung kann in Masse, Lösung, Suspension oder Emulsion erfolgen. Vorzugsweise erfolgt sie nach dem Emulsionspolymerisationsverfahren. Zur Copolymerisation wird das peroxydhaltige Polymerisat a) vorgelegt, vorzugsweise in Form eines Saatlatex. Die Monomere der Polymerphase b) könnenvorgelegt oder, beispielsweise als Voremulsion, dosiert werden. Die Zugabemenge des Monomeren wird so eingestellt, daß im fertigen Propfprodukt zwischen 1 und 99 Gew.-% dieser Monomereinheiten enthalten sind.

Die Pfropfpolymerisation erfolgt bei Temperaturen ≥ 60°C, vorzugsweise ≥ 70°C, ohne weitere Zugabe von Initiatoren, da die peroxydhaltigen copolymerisate als Makroinitiatoren die Reaktion initiieren. Übliche Beschleuniger, wie Thioglykolsäure, Zn-Thioglykolat, Thioharnstoff, können zugesetzt werden. Die Copolymerisation kann ohne oder mit Zusatz von Emulgator erfolgen. Vorzugsweise werden 0.1 bis 5.0 Gew.-% Emulgator, bezogen auf das Gesamtgewicht des Copolymerisats, eingesetzt.

Die Copolymerlatices eignen sich zur Verwendung als Bindemittel im Textilbereich (non-wovens), als wärmestabile Binder z.B. bei Dachbahnen-Beschichtungen, als Klebemittel in Putzen und als Bindemittel in Dispersionsfarben. Eine weitere Aufarbeitung des Copolymerlatex kann beispielsweise durch Sprühtrocknung, Walzentrocknung oder durch Koagulation mit anschließender Trocknung erfolgen. Copolymerharze, die durch Koagulation bzw. Sprühtrocknung gewonnen wurden, eignen sich als Schlagzähmodifier in Kunststoffen, als Phasenvermittler bei Polymerblends, als "Low Profile Additives" in UP-Harzen und zur Verwendung als thermoplastische Elastomere.

Die nachfolgenden Beispiele dienen zur weiteren Erläuterung der Erfindung:

### Beispiel 1:

Herstellung eines peroxidgruppenhaltigen Copolymerisats mit 0,4 Gew.-% Bis-(Monovinyladipoyl)-peroxid:

Zunächst wurden vier Dosierlösungen vorbereitet: 1. KPS-Lösung: 6,22 g Kaliumpersulfat wurden in 154 ml Wasser gelöst. 2. Brüggolit-Lösung: 1,72 g Natriumsalz der Hydroxymethansulfinsäure ("Brüggolit") wurden in 77 ml Wasser gelöste. 3. Monomere: 3,07 g Bis-(Monovinyladipoyl)-peroxid wurden in 740 ml Vinylacetat gelöst. 4. Voremulsion: 13,5 g einer 35 %igen Lösung eines Nonylphenol-Ethylenoxidsulfats ("Rewopol NOS25") und 76,8 g einer 25 %igen Lösung eines Isotridecylalkoholethylenoxids ("Genapol^{R} X360") wurden in 77 ml Wasser emulgiert.
In einem 2 1 Glasgefäß mit Rührer und Innenthermometer wurden vorgelegt: 822 ml Wasser, 3,84 g Rewopol NOS25, 4,39 g Genapol^{R}X360 und 82,6 ml Vinylacetat. Die Mischung wurde unter Rühren auf 30°C erwärmt. Nach Erreichen des Temperaturgleichgewichts wurden die beiden Initiatordosierungen (KPS und Brüggolit) gestartet und der Samenlatex innerhalb von 15 Minuten auspolymerisiert. War keine exotherme Reaktion mehr zu beobachten, so wurden die Monomer- und die Voremulsionsdosierungen gestartet. Die Dosierraten wurden entsprechend einer Dosierzeit von 5 Stunden im Falle der Monomeren (3.) und der Voremulsion (4.) und von 6 Stunden im Falle der Initiatoren (1.) und (2.) gewählt. Während der gesamten Reaktionszeit wurde darauf geachtet, daß die Innentemperatur von 30°C nicht überschritten wurde.

Es resultierte eine feinteilige Dispersion mit einem Festgehalt von 39,6 Gew.-% und einer polydispersen Teilchengrößenverteilung, wobei die mittlere Teilchengröße 107 nm betrug. Die Glasübergangstemperatur des Polymerharzes (DSC) lag bei + 28,7°C, sein K-Wert (in Tetrahydrofuran THF gemessen) betrug 67,0. Das mittlere Molekulargewicht (Zahlenmittel) des löslichen Anteils betrug (GPC, Polystyrol Standards) Mₙ=31300. Von der Dispersion wurde bei Raumtemperatur ein Film gezogen. Der fertige Film wurde 5 Minuten bei 150°C getempert und 6 Stunden in Ethylacetat am Rückfluß gekocht. Sein unlöslicher Anteil (Vernetzungsgrad) betrug 1,2 %.

### Beispiel 2:

Herstellung eines peroxidgruppenhaltigen Copolymerisats mit 0,6 Gew.-% Bis-(Monovinyladipoyl)-peroxid:

Zunächst wurden vier Dosierlösungen vorbereitet: 1. KPS-Lösung : 8,13 g Kaliumpersulfat wurden in 150 ml Wasser gelöst. 2. Brüggolit-Lösung: 4,26 g Natriumsalz der Hydroxymethansulfinsäure ("Brüggolit") wurden in 60 ml Wasser gelöst. 3. Monomere: 3,61 g Bis-(Monovinyladipoyl)-peroxid wurden in 538 ml Vinylacetat gelöst. 4. Voremulsion: 10,3 g einer 35 %igen Lösung eines Nonylphenol-Ethylenoxidsulfats ("Rewopol NOS25") und 60,2 g einer 25 %igen Lösung eines Isotridecylalkoholethylenoxids ("Genapol X360") wurden in 77 ml Wasser emulgiert.

Die Reaktionsführung erfolgte völlig analog zu Beispiel 1.

Es resultiert eine feinteilige Dispersion mit einem Festgehalt von 38,8 Gew.-% und einer polydispersen Teilchengrößenverteilung, wobei die mittlere Teilchengröße 115 nm betrug. Die Glasübergangstemperatur des Polymerharzes (DSC) lag bei + 23,7°C, sein K-Wert (in Tetrahydrofuran THF gemessen) betrug 66,1. Das mittlere Molekulargewicht (Zahlenmittel) des löslichen Anteils betrug (GPC, Polystyrol Standards) Mₙ=95000. Der in Ethylacetat unlösliche Anteil (Vernetzungsgrad) betrug 0,2 %.

### Beispiel 3:

Herstellung eines peroxidgruppenhaltigen Copolymerisats mit 0,8 Gew.-% Bis-(Monovinyladipoyl)-peroxid:

Es wurde genauso verfahren wie bei Beispiel 1 mit dem Unterschied, daß in der Monomerdosierlösung 6,15 g Bis-(Monovinyladipoyl)-peroxid in 737 ml Vinylacetat gelöst wurden.

Es resultierte eine feinteilige Dispersion mit einem Festgehalt von 39,6 Gew.-% und einer polydispersen Teilchengrößenverteilung, wobei die mittlere Teilchengröße 105 nm betrug. Die Glasübergangstemperatur des Polymerharzes (DSC) lag bei + 34,2°C, sein K-Wert (in Tetrahydrofuran THF gemessen) betrug 61,1. Das mittlere Molekulargewicht (Zahlenmittel) des löslichen Anteils betrug (GPC, Polystyrol Standards) Mₙ=34500. Der in Ethylacetat unlösliche Anteil (Vernetzungsgrad) betrug 2,7 %.

### Beispiel 4:

Herstellung eines peroxidgruppenhaltigen Copolymerisats mit 3,0 Gew.-% Bis-(Monovinyladipoyl)-peroxid:

Es wurde genauso verfahren wie bei Beispiel 1 mit dem Unterschied, daß in der Monomerdosierlösung 23,1 g Bis-(Mono-vinyladipoyl)-peroxid in 718 ml Vinylacetat gelöst wurden.

Es resultierte eine feinteilige Dispersion mit einem Festgehalt von 39,5 Gew.-% und einer polydispersen Teilchengrößenverteilung, wobei die mittlere Teilchengröße 77 nm betrug. Die Glasübergangstemperatur des Polymerharzes (DSC) lag bei + 32,8°C, sein K-Wert (in Tetrahydrofuran THF gemessen) betrug 51,9. Eine Molekulargewichtsbestimmung mittels GPC konnte aufgrund des mengenmäßig überwiegenden unlöslichen Anteils nicht durchgeführt werden. Der in Ethylacetat unlösliche Anteil (Vernetzungsgrad) betrug 56,9 %.

### Beispiel 5:

Pfropfpolymerisation von Styrol/Acrylsäure auf den Makroinitiator von Beispiel 1.

Zur Pfropfpolymerisation wurden in einem Polymerisationskessel 693 g der peroxidgruppenhaltigen Dispersion aus Beispiel 1 zusammen mit 1,70 g einer 1 %igen Eisen(II)-Ammoniumsulfatlösung und 0,17 g Natriumnitrit vorgelegt, auf 70°C erhitzt und unter Rühren über einen Zeitraum von 2,5 Stunden eine Voremulsion bestehend aus 66,4 g Styrol, 1,7 g Acrylsäure und 6,81 g einer 20 %igen Aerosol MA-Lösung in 34 ml Wasser zudosiert. Nach Dosierende wurde die Pfropfpolymerisation bei 80°C vervollständigt.

Es resultierte eine 43,4 %ige Polymerdispersion mit einem Restmonomergehalt von 0,62 Gew.-% und einer mittleren Teilchengröße von 285 nm bei einer engen Teilchengrößenverteilung. Der K-Wert des Harzes lag bei 67,3, das mittlere Molekulargewicht (Zahlenmittel) des löslichen Anteils betrug (GPC, Polystyrol Standards) Mₙ=29300, der unlösliche Anteil in Essigsäureethylester belief sich auf 2,7 Gew.-%. In der DSC erschien das Material zweiphasig, die Glasübergangstemperaturen wurden zu T_{g}=37,0°C und T_{g}=104,3°C bestimmt.

### Beispiel 6:

Pfropfpolymerisation von Styrol/Acrylsäure auf den Makroinitiator von Beispiel 2.

Zur Pfropfpolymerisation wurden in einem Polymerisationskessel 928 g der peroxidgruppenhaltigen Dispersion aus Beispiel 2 zusammen mit 2,0 g einer 1 %igen Eisen(II)-Ammoniumsulfatlösung vorgelegt, auf 70°C erhitzt und unter Rühren über einen Zeitraum von 2,5 Stunden eine Voremulsion bestehend aus 38,0 g Styrol, 2,0 g Acrylsäure und 4,0 g einer 20 %igen Aerosol MA-Lösung in 24 ml Wasser zudosiert. Nach Dosierende wurde die Pfropfpolymerisation bei 80°C vervollständigt.

Es resultierte eine 39,4 %ige Polymerdispersion mit einem Restmonomergehalt von 0,78 Gew.-% und einer mittleren Teilchengröße von 328 nm bei einer engen Teilchengrößenverteilung. Der K-Wert des Harzes lag bei 69,8, das mittlere Molekulargewicht (Zahlenmittel) des löslichen Anteils betrug (GPC, Polystyrol Standards) Mₙ=117000; der unlösliche Anteil in Essigsäureethylester belief sich auf 27,0 Gew.-%. In der DSC erschien das Material zweiphasig, die Glasübergangstemperaturen wurden zu T_{g}=26,0°C und T_{g}=98,5°C bestimmt.

### Beispiel 7:

Pfropfpolymerisation von Styrol/Acrylsäure auf den Makroinitiator von Beispiel 3.

Zur Pfropfpolymerisation wurden in einem Polymerisationskessel 522 g der peroxidgruppenhaltigen Dispersion aus Beispiel 3 zusammen mit 1,72 g einer 1 %igen Eisen(II)Ammoniumsulfatlösung und 0,09 g Natriumnitrit vorgelegt, auf 70°C erhitzt und unter Rühren über einen Zeitraum von 2,5 Stunden eine Voremulsion bestehend aus 134 g Styrol, 3,44 g Acrylsäure und 17,2 g einer 20 %igen Aerosol MA-Lösung in 69 ml Wasser zudosiert. Nach Dosierende wurde die Pfropfpolymerisation bei 80°C vervollständigt.

Es resultierte eine 42,5 %ige Polymerdispersion mit einem Restmonomergehalt von 1,0 Gew.-% und einer mittleren Teilchengröße von 248 nm bei einer breiten Teilchengrößenverteilung. Der K-Wert des Harzes lag bei 74,9, das mittlere Molekulargewicht (Zahlenmittel) des löslichen Anteils betrug (GPC, Polystyrol Standards) Mₙ=98800, der unlösliche Anteil in Essigsäureethylester belief sich auf 22,2 Gew.-%. In der DSC erschien das Material zweiphasig, die Glasübergangstemperaturen wurden zu T_{g}=39,9°C und T_{g}=104,5°C bestimmt.

### Beispiel 8:

Pfropfpolymerisation von Methylmethacrylat auf den Makroinitiator von Beispiel 3.

Zur Pfropfpolymerisation wurden in einem Polymerisationskessel 532 g der peroxidgruppenhaltigen Dispersion aus Beispiel 3 zusammen mit 1,76 g einer 1 %igen Eisen(II)Ammoniumsulfatlösung und 0,09 g Natriumnitrit vorgelegt, auf 70°C erhitzt und unter Rühren über einen Zeitraum von 2,5 Stunden eine Voremulsion bestehend aus 141 g Methylmethacrylat und 14,1 g einer 20 %igen Aerosol MA-Lösung in 70 ml Wasser zudosiert. Nach Dosierende wurde die Pfropfpolymerisation bei 80°C vervollständigt.

Es resultierte eine 43,0 %ige Polymerdispersion mit einem Restmonomergehalt von 0,1 Gew.-% und einer mittleren Teilchengröße von 247 nm bei einer engen Teilchengrößenverteilung. Der K-Wert des Harzes lag bei 70,3, das mittlere Molekulargewicht (Zahlenmittel) des löslichen Anteils betrug (GPC, Polystyrol Standards) Mₙ=68100, der unlösliche Anteil in Essigsäureethylester belief sich auf 15,8 Gew.-%. Die Glasübergangstemperatur wurde zu T_{g}=40,4°C bestimmt (DSC).

### Beispiel 9:

Pfropfpolymerisation von Styrol/Acrylsäure auf den Makroinitiator von Beispiel 4.

Zur Pfropfpolymerisation wurden in einem Polymerisationskessel 523 g der peroxidgruppenhaltigen Dispersion aus Beispiel 4 zusammen mit 1,72 g einer 1 %igen Eisen(II)Ammoniumsulfatlösung und 0,17 g Natriumnitrit vorgelegt, auf 70°C erhitzt und unter Rühren über einen Zeitraum von 2,5 Stunden eine Voremulsion bestehend aus 134 g Styrol, 3,44 g Acrylsäure und 17,2 g einer 20 %igen Aerosol MA-Lösung in 69 ml Wasser zudosiert. Nach Dosierende wurde die Pfropfpolymerisation bei 80°C vervollständigt.

Es resultierte eine 43.4 %ige Polymerdispersion mit einem Restmonomergehalt von 0,8 Gew.-% und einer mittleren Teilchengröße von 234 nm bei einer engen Teilchengrößenverteilung. Der K-Wert des Harzes lag bei 59,8, der unlösliche Anteil in Essigsäureethylester belief sich auf 52 Gew.-%. In der DSC erschien das Material zweiphasig, die Glasübergangstemperaturen wurden zu T_{g}=37,8°C und T_{g}=103,3°C bestimmt.

### Beispiel 10:

Pfropfpolymerisation von Methylmethacrylat auf den Makroinitiator von Beispiel 4.

Zur Pfropfpolymerisation wurden in einem Polymerisationskessel 534 g der peroxidgruppenhaltigen Dispersion aus Beispiel 4 zusammen mit 1,76 g einer 1 %igen Eisen(II)-Ammoniumsulfatlösung und 0,17 g Natriumnitrit vorgelegt, auf 70°C erhitzt und unter Rühren über einen Zeitraum von 2,5 Stunden eine Voremulsion bestehend aus 141 g Methylmethacrylat und 14,1 g einer 20 %igen Aerosol MA-Lösung in 70 ml Wasser zudosiert. Nach Dosierende wurde die Pfropfpolymerisation bei 80°C vervollständigt.

Es resultierte eine 43,1 %ige Polymerdispersion mit einem Restmonomergehalt von 0,3 Gew.-% und einer mittleren Teilchengröße von 251 nm bei einer engen Teilchengrößenverteilung. Der K-Wert des Harzes lag bei 66,0, der unlösliche Anteil in Essigsäureethylester belief sich auf 51,3 Gew.-%. Die Glasübergangstemperatur wurde zu T_{g}=43,8°C bestimmt (DSC).

### Vergleichsbeispiel 1:

Herstellung eines Homopolymerisats ohne Zugabe einer olefinisch ungesättigten Peroxy-Verbindung:

Es wurde genauso verfahren wie bei den Beispielen 1-4, mit dem Unterschied, daß kein copolymerisierbares Peroxid zusammen mit der Monomerdosierung eingefahren wurde.

Es resultierte eine feinteilige Dispersion mit einem Festgehalt von 39,4 Gew.-% und einer polydispersen Teilchengrößenverteilung, wobei die mittlere Teilchengröße 113 nm betrug. Die Glasübergangstemperatur des Polymerharzes (DSC) lag bei + 35,0°C, sein K-Wert (in Tetrahydrofuran THF gemessen) betrug 67,0. Das mittlere Molekulargewicht (Zahlenmittel) des löslichen Anteils betrug (GPC, Polystyrol Standards) Mₙ=30800. Der in Ethylacetat unlösliche Anteil (Vernetzungsgrad) betrug 0,1 %.

### Vergleichsbeispiel 2:

Herstellung eines Homopolymerisats ohne Zugabe einer olefinisch ungesättigten Peroxy-Verbindung:

Es wurde genauso verfahren wie beim Vergleichsbeispiel 1.

Es resultierte eine feinteilige Dispersion mit einem Festgehalt von 39,5 Gew.-% und einer polydispersen Teilchengrößenverteilung, wobei die mittlere Teilchengröße 113 nm betrug. Die Glasübergangstemperatur des Polymerharzes (DSC) lag bei + 32,6°C, sein K-Wert (in Tetrahydrofuran THF gemessen) betrug 68,4. Das mittlere Molekulargewicht (Zahlenmittel) des löslichen Anteils betrug (GPC, Polystyrol Standards) Mₙ=28300. Der in Ethylacetat unlösliche Anteil (Vernetzungsgrad) betrug 0,1 %.

### Vergleichsbeispiel 3:

Pfropfpolymerisation von Styrol/Acrylsäure auf die homopolymere Polyvinylacetatdispersion von Vergleichsbeispiel 1 mit niedermolekularen Initiatoren (Vergleich mit Beispiel 7):

Zunächst wurden zwei Dosierlösungen vorbereitet: 1. KPS-Lösung: 2,16 g Kaliumpersulfat wurden in 41 ml Wasser gelöst. 2. Monomere: 134 g Styrol, 3,43 g Acrylsäure und 17,1 g einer 20 %igen Aerosol MA-Lösung wurden in 69 ml Wasser emulgiert.

Zur Pfropfpolymerisation wurden in einem 2 l Glasgefäß mit Rührer und Innenthermometer vorgelegt: 21 ml Wasser, 521 g der Dispersion aus Vergleichsbeispiel 1 und 1,71 g einer 1 %igen Eisen(II)-Ammoniumsulfatlösung. Die Mischung wurde unter Rühren auf 80°C erwärmt. Nach Erreichen des Temperaturgleichgewichts wurden sowohl die Initiatordosierung (KPS) als auch die Voremulsionsdosierung gestartet. Die Dosierraten wurden entsprechend einer Dosierzeit von 2,5 Stunden im Falle der Voremulsion und 3 Stunden im Falle des Initiators gewählt. Nach Dosierende wurde die Reaktion bei 85°C vervollständigt.

Es resultierte eine 42,8 %ige Polymerdispersion mit einem Restmonomergehalt von 0,52 Gew.-% und einer mittleren Teil-chengröße von 394 nm bei einer breiten Teilchengrößenverteilung. Der K-Wert des Harzes lag bei 64,0, der unlösliche Anteil in Essigsäureethylester belief sich auf 13,1 Gew.-%. In der DSC erschien das Material zweiphasig, die Glasübergangstemperaturen wurden zu T_{g}=35,0°C und T_{g}=101,3°C bestimmt.

### Verglmichsbeispiel 4:

Pfropfpolymerisation von Styrol/Acrylsäure auf die Homopolymere Polyvinylacetatdispersion von Vergleichsbeispiel 2 mit niedermolekularen Initiatoren (Vergl. mit Beispiel 2):

Zunächst wurden zwei Dosierlösungen vorbereitet: 1. KPS-Lösung: 2,16 g Kaliumpersulfat wurden in 41 ml Wasser gelöst. 2. Monomere: 140 g Methylmethacrylat und 17,5 g einer 20 %igen Aerosol MA-Lösung wurden in 70 ml Wasser emulgiert.

Zur Pfropfpolymerisation wurden in einem 2 l Glasgefäß mit Rührer und Innenthermometer vorgelegt: 21 ml Wasser, 530 g der Dispersion aus Vergleichsbeispiel 2 und 1,75 g einer 1 %igen Eisen(II)-Amnoniumsulfatlösung. Die Mischung wurde unter Rühren auf 80°C erwärmt. Nach Erreichen des Temperaturgleichgewichts wurden sowohl die Initiatordosierung (KPS) als auch die Voremulsionsdosierung gestartet. Die Dosierraten wurden entsprechend einer Dosierzeit von 2,5 Stunden im Falle der Voremulsion und 3 Stunden im Falle des Initiators gewählt. Nach Dosierende wurde die Reaktion bei 85°C vervollständigt.

Die Dispersion koagulierte in der Schlußphase der Polymerisation.

### Vergleichsbeispiel 5:

Herstellung einer homopolymeren Polystyroldispersion

In einem 2 l Glasgefäß mit Rührer und Innenthermometer wurden vorgelegt: 664 ml Wasser. 121 ml einer 20 %igen Aerosol MA-Lösung, 3,3 g einer 1 %igen Eisen(II)-Ammoniumsulfatlösung, 0,3 g Kaliumpersulfat und 200 g Styrol. Nach Erwärmen der Mischung auf 70°C wurde sofort anschließend eine Lösung von 1,33 g Kaliumpersulfat in 73 ml Wasser über einen Zeitraum von 4 Stunden zudosiert. Eine halbe Stunde nach Reaktionsstart wurden 465 g Styrol über einen Zeitraum von 3,5 Stunden zudosiert. Die Reaktion wurde anschließend bei 80°C vervollständigt.

Es resultierte eine 44,4 %ige Polymerdispersion mit einer polydispersen Teilchengrößenverteilung, wobei die mittlere Teilchengröße ca. 143 nm betrug. Der K-Wert des Harzes lag bei 67,0. Das Polymerharz war vollständig in Essigsäureethylester löslich. Die Glasübergangstemperatur lag bei T_{g}= 103,2°C.

In den nachfolgenden Tabellen 1 bis 3 sind die wichtigsten Daten der Beispiele bzw. der Vergleichsbeispiele der besseren Übersicht wegen zusammengestellt.

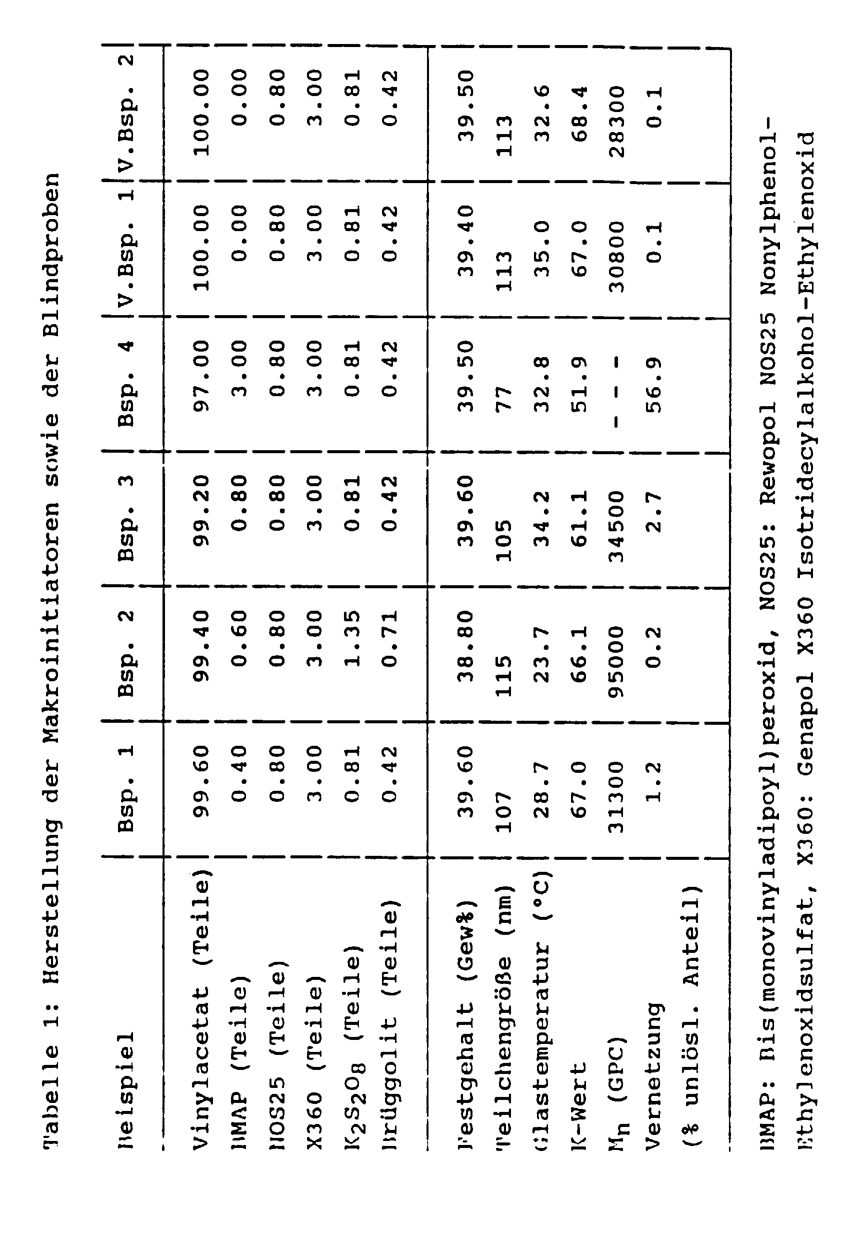

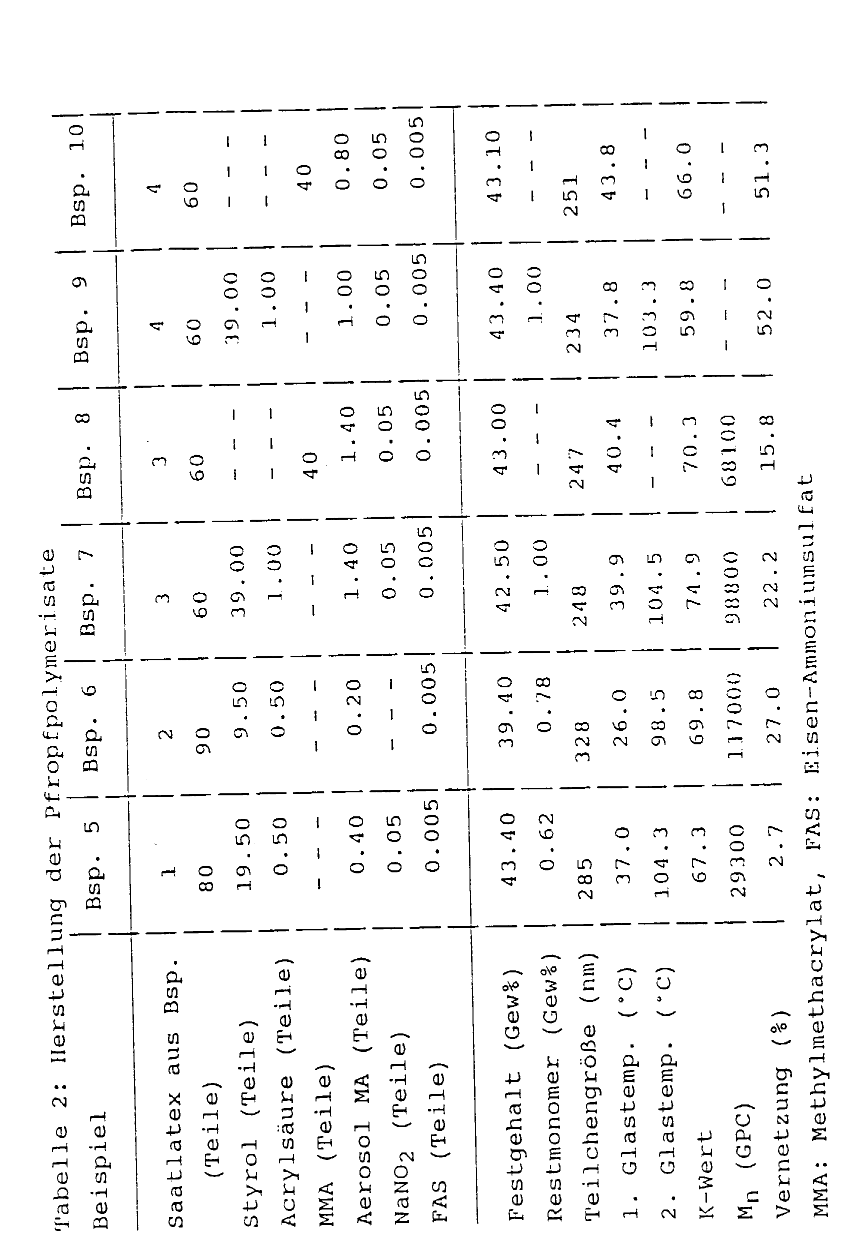

**Tabelle 3:**

| Pfropfcopolymerisate der Vergleichsbeispiele | | | |
|---|---|---|---|
| Vergleichsbeispiel | 3 | 4 | 5 |
| Saatlatex aus Verglbsp. | 1 | 2 | --- |
| (Teile) | 60.00 | 60.00 | --- |
| Styrol (Teile) | 39.00 | --- | 100.00 |
| Acrylsäure (Teile) | 1.00 | --- | --- |
| MMA (Teile) | --- | 40.00 | --- |
| Aerosol MA (Teile) | 1.00 | 1.00 | 4.00 |
| Kaliumpersulfat (Teile) | 0.63 | 0.63 | 0.25 |
| FAS (Teile) | 0.005 | 0.005 | 0.005 |
| Festgehalt (Gew%) | 42.8 | koaguliert | 44.4 |
| Restmonomer (Gew%) | 0.52 | --- | 0.73 |
| Teilchengröße (nm) | 394 | --- | 143 |
| 1. Glastemperatur (°C) | 35.0 | --- | 103.2 |
| 2. Glastemperatur (°C) | 101.3 | --- | --- |
| K-Wert | 64.0 | --- | 67.0 |
| Mₙ (GPC) | --- | --- | --- |
| Vernetzung (%) | 13.1 | --- | 0.1 |

Aus Tabelle 1 (Beispiele 1 bis 4) ist ersichtlich, daß das erfindungsgemäße copolymerisierbare Acylperoxid als Vernetzer wirkt: Der K-Wert, der nur den löslichen Anteil erfaßt, sinkt kontinuierlich mit steigendem BMAP-Gehalt. Der in Ethylacetat unlösliche Anteil, der Vernetzungsgrad, ist beträchtlich, wenn 3 Gew.-% BMAP zugegeben werden. Bei den erfindungsgemäßen Pfropfprodukten (Tabelle 2) steigt das mittlere Molekulargewicht gegenüber der Pfropfgrundlage (=Makroinitiator) an (K-Wert bzw. Mₙ). Bei Vergleichsbeispiel 3 (Tabelle 3) sinkt der K-Wert gegenüber der Pfropfbasis ab. Reines Polystyrol (Vergl.bsp. 5) ist vollständig und die Blindprobe (Vergl.bsp. 3) zu einem wesentlich höheren Anteil als die erfindungsgemäßen Pfropfprodukte in Ethylacetat löslich.

## Patentansprüche

1. Pfropf- und Core-Shell-Copolymerisate, hergestellt aus einer peroxygruppenhaltigen Polymerphase a) welche 0.01 bis 20 Gew.-% einer olefinisch zweifach ungesättigten Peroxyverbindung der Formel H₂C=CH-O-CO-R¹-CO-O-O-CO-R¹-CO-O-CH=CH₂, wobei R¹ für eine chemische Bindung oder für eine lineare oder verzweigte Alkylengruppe mit 1 bis 10 C-Atomen oder für eine Cycloalkylengruppe mit 3 bis 10 C-Atomen oder für einen zweiwertigen Rest einer aromatischen Verbindung mit 6 bis 14 C-Atomen steht,
und 80 bis 99.99 Gew.-% eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-atomen, Olefine, Vinylaromaten, Vinylhalogenide und/oder Vinylether, enthält, und
einer darauf aufgepfropften Polymerphase b), die durch Aufpfropfen eines oder mehrerer Monomere aus der Gruppe (Meth)acrylsäureester von Alkoholen mit 1 bis 10 C-Atomen, Vinylester von gesättigten aliphatischen Carbonsäuren mit 2 bis 10 C-Atomen, Olefine, Vinylhalogenide und Styrol sowie Styrolderivate, erhalten wird, wobei die Pfropf- und Core-Shell-Copolymerisate 1 bis 99 Gew.-% an Polymerphase b), bezogen auf das Gesamtgewicht der Pfropf- und Core-shell-Copolymerisate, enthalten.

2. Pfropf- und Core-shell-Copolymerisate nach Anspruch 1, dadurch gekennzeichnet, daß die peroxygruppenhaltige Polymerphase a) ein oder mehrere Comonomere aus der Gruppe Vinylacetat, 1-Methylvinylacetat, Vinylpropionat, Vinyllaurat, Vinylchlorid und/oder Ethylen und 0.01 bis 10 Gew.-% einer oder mehrerer olefinisch zweifach ungesättigter Peroxyverbindunqen der Formel H₂C=CH-O-CO-(CH₂)ₙ-CO-O-O-CO-(CH₂)ₙ-CO-O-CH=CH₂ mit n = 1 bis 8 enthält.

3. Pfropf- und Core-Shell-Copolymerisate nach Anspruch 1 oder 2, dadurch gekennzeichnet, daß die Polymerphase b) (Meth)acrylsäureester von Alkoholen mit 1 bis 10 C-Atomen, Vinylhalogenide, Styrol und/oder Styrolderivate enthält.

4. Pfropf- und Core-Shell-Copolymerisate nach Anspruch 1 bis 3, dadurch gekennzeichnet, daß die peroxygruppenhaltige Polymerphase a) 0 bis 50 Gew.-% Ethylen, mindestens 50 Gew.-% Vinylacetat und 0.01 bis 5 Gew.-% Bis-(Monovinyl-adipoyl)-peroxid enthält.

5. Pfropf- und Core-Shell-Copolymerisate nach Anspruch 1 bis 4, dadurch gekennzeichnet, daß die Polymerphase b) Styroi oder Methylmethacrylat enthält.

6. Verfahren zur Herstellung der Pfropf- und Core-Shell-Copolymerisate nach Anspruch 1 bis 5, dadurch gekennzeichnet, daß das peroxydhaltige Polymerisat a) mit den Monomeren der Polymerphase b) in Masse, Lösung, Suspension oder Emulsion bei Temperaturen ≥ 60°C ohne weitere Zugabe von Initiatoren umgesetzt wird.

7. Verfahren nach Anspruch 6, dadurch gekennzeichnet, daß die Umsetzung nach dem Emulsionspolymerisationsverfahren unter Zusatz von 0.1 bis 5.0 Gew.-% Emulgator, bezogen auf das Gesamtgewicht des Copolymerisats, durchgeführt wird.

8. Peroxygruppenhaltige Copolymerisate eines oder mehrerer Comonomere aus der Gruppe der (Meth)acrylsäureester von Alkoholen mit 1 bis 10 C-Atomen, Vinylester von gesättigten aliphatischen Carbonsäuren mit 2 bis 10 C-Atomen, Olefine, Vinylaromaten, Vinylhalogenide und/oder Vinylether mit olefinisch zweifach ungesättigten Diacylperoxiden der Formel 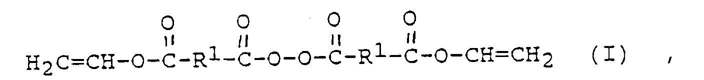 wobei R¹ für eine chemische Bindung oder für eine lineare oder verzweigte Alkylengruppe mit 1 bis 10 C-Atomen oder für eine Cycloalkylengruppe mit 3 bis 10 C-Atomen oder für einen zweiwertigen Rest einer aromatischen Verbindung mit 6 bis 14 C-Atomen steht.

9. Peroxygruppenhaltige copolymerisate nach Anspruch 8, dadurch gekennzeichnet, daß R¹ für eine chemische Bindung, für einen Alkylenrest (CH₂)ₙ mit n = 1 bis 8, für einen Phenylenrest oder für einen Rest CH=CH steht.

10. Peroxygruppenhaltige Copolymerisate nach Anspruch 8 oder 9, dadurch gekennzeichnet, daß als olefinisch zweifach ungesättigtes Diacylperoxid Bis-(Monovinyl-adipoyl)peroxid enthalten ist.

11. Peroxygruppenhaltige Copolymerisate enthaltend 0 bis 50 Gew.-% Ethylen, mindestens 50 Gew.-% Vinylacetat und 0.01 bis 5 Gew.-% Bis-(Monovinyl-adipoyl)-peroxid.

12. Verfahren zur Herstellung der peroxygruppenhaltigen Copolymerisate nach Anspruch 8 bis 11, dadurch gekennzeichnet, daß die Herstellung durch Polymerisation in Masse, in Lösung, in Suspension oder in Emulsion in einem Temperaturbereich von 0 bis 50°C erfolgt.

13. Verfahren nach Anspruch 12, dadurch gekennzeichnet, daß die Polymerisation durch radikalische Initiierung, gegebenenfalls in Gegenwart eines Redoxinitiator-Systems, erfolgt.

14. Verwendung der Pfropf- und Core-Shell-Copolymerisate nach Anspruch 1 bis 5 als wäßrige Bindemittel im Textilbereich, in Dispersionsfarben und Putzen sowie als Klebemittel.

15. Verwendung der Pfropf- und Core-Shell-Copolymerisate nach Anspruch 1 bis 5 in Form deren Festscoffe als Schlagzähmodifier in Kunststoffen, als Phasenvermittler bei Polymerblends, als "low profile"-Additive in un-Harzen und als thermoplastische Elastomere.

## Claims

1. Graft and core-shell copolymers prepared from a peroxy-group-containing polymer phase a) which contains from 0.01 to 20% by weight of an olefinically diunsaturated peroxy compound of the formula H₂C=CH-O-CO-R¹-CO-O-O-CO-R¹-CO-O-CH=CH₂, where R¹ is a chemical bond or a linear or branched alkylene group having from 1 to 10 carbon atoms or a cycloalkylene group having from 3 to 10 carbon atoms or a divalent radical of an aromatic compound having from 6 to 14 carbon atoms,
and from 80 to 99.99% by weight of one or more comonomers from the group consisting of (meth)acrylic esters of alcohols having from 1 to 10 carbon atoms, vinyl esters of saturated aliphatic carboxylic acids having from 2 to 10 carbon atoms, olefins, vinylaromatics, vinyl halides and/or vinyl ethers, and
a polymer phase b) grafted thereon, which is obtained by grafting on one or more monomers from the group consisting of (meth)acrylic esters of alcohols having from 1 to 10 carbon atoms, vinyl esters of saturated aliphatic carboxylic acids having from 2 to 10 carbon atoms, olefins, vinyl halides and styrene and also styrene derivatives, with the graft and core-shell copolymers containing from 1 to 99% of polymer phase b), based on the total weight of the graft and core-shell copolymers.

2. Graft and core-shell copolymers according to Claim 1, characterized in that the peroxy-group-containing polymer phase a) contains one or more comonomers from the group consisting of vinyl acetate, 1-methylvinyl acetate, vinyl propionate, vinyl laurate, vinyl chloride and/or ethylene and from 0.01 to 10% by weight of one or more olefinically diunsaturated peroxy compounds of the formula H₂C=CH-O-CO-(CH₂)ₙ-CO-O-O-CO-(CH₂)ₙ-CO-O-CH=CH₂ having n = from 1 to 8.

3. Graft and core-shell copolymers according to Claim 1 or 2, characterized in that the polymer phase b) contains (meth)acrylic esters of alcohols having from 1 to 10 carbon atoms, vinyl halides, styrene and/or styrene derivatives.

4. Graft and core-shell copolymers according to Claims 1 to 3, characterized in that the peroxy-group-containing polymer phase a) contains from 0 to 50% by weight of ethylene, at least 50% by weight of vinyl acetate and from 0.01 to 5% by weight of bis(monovinyladipoyl) peroxide.

5. Graft and core-shell copolymers according to Claims 1 to 4, characterized in that the polymer phase b) contains styrene or methyl methacrylate.

6. Process for preparing the graft and core-shell copolymers according to Claims 1 to 5, characterized in that the peroxide-containing polymer a) is reacted with the monomers of the polymer phase b) in bulk, solution, suspension or emulsion at temperatures ≥ 60°C without further addition of initiators.

7. Process according to Claim 6, characterized in that the reaction is carried out by the emulsion polymerization process with addition of from 0.1 to 5.0% by weight of emulsifier, based on the total weight of the copolymer.

8. Peroxy-group-containing copolymers of one or more comonomers from the group consisting of (meth)acrylic esters of alcohols having from 1 to 10 carbon atoms, vinyl esters of saturated aliphatic carboxylic acids having from 2 to 10 carbon atoms, olefins, vinylaromatics, vinyl halides and/or vinyl ethers with olefinically diunsaturated diacyl peroxides of the formula 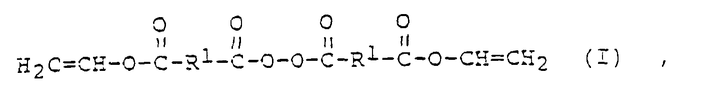 where R¹ is a chemical bond or a linear or branched alkylene group having from 1 to 10 carbon atoms or a cycloalkylene group having from 3 to 10 carbon atoms or a divalent radical of an aromatic compound having from 6 to 14 carbon atoms.

9. Peroxy-group-containing copolymers according to Claim 8, characterized in that R¹ is a chemical bond, an alkylene radical (CH₂)ₙ having n = 1 to 8, a phenylene radical or a radical CH=CH.

10. Peroxy-group-containing copolymers according to Claim 8 or 9, characterized in that the olefinically diunsaturated diacyl peroxide present is bis(monovinyladipoyl) peroxide.

11. Peroxy-group-containing copolymers containing from 0 to 50% by weight of ethylene, at least 50% by weight of vinyl acetate and from 0.01 to 5% by weight of bis(monovinyladipoyl) peroxide.

12. Process for preparing the peroxy-group-containing copolymers according to Claims 8 to 11, characterized in that the preparation is carried out by polymerization in bulk, in solution, in suspension or in emulsion in a temperature range from 0 to 50°C.

13. Process according to Claim 12, characterized in that the polymerization is carried out by free-radical initiation, if desired in the presence of a redox initiator system.

14. Use of the graft and core-shell copolymers according to Claims 1 to 5 as aqueous binders in the textile field, in emulsion paints and plasters and renders and also as adhesives.

15. Use of the graft and core-shell copolymers according to Claims 1 to 5 in the form of their solids as impact modifiers in plastics, as phase coupling agents in polymer blends, as low profile additives in UP resins and as thermoplastic elastomers.

## Revendications

1. Copolymérisats greffés et capsulés, préparés à partir d'une phase polymère a), contenant des groupements peroxydes, qui contient de 0,01 à 20 % en poids d'un composé peroxyde à deux insaturations oléfiniques de formule
H₂C=CH-O-CO-R¹-CO-O-O-CO-R¹-CO-O-CH=CH₂, R¹ représentant une liaison chimique, ou un groupement alkylène linéaire ou ramifié, ayant de 1 à 10 atomes de C, ou un groupement cycloalkylène ayant de 3 à 10 atomes de C, ou un résidu divalent d'un composé aromatique ayant de 6 à 14 atomes de C, et de 80 à 99,99 % en poids d'un ou de plusieurs comonomères du groupe des esters (méth)acryliques d'alcools ayant de 1 à 10 atomes de C, des esters vinyliques d'acides carboxyliques aliphatiques saturés ayant de 2 à 10 atomes de C, des oléfines, des produits aromatiques vinyliques, des halogénures vinyliques et/ou des éthers vinyliques, et à partir
d'une phase polymère b) greffée sur celle-ci, qui est obtenue par greffage d'un ou de plusieurs monomères du groupe des esters (méth)acryliques d'alcools ayant de 1 à 10 atomes de C, des esters vinyliques d'acides carboxyliques aliphatiques saturés ayant de 2 à 10 atomes de C, des oléfines, des halogénures vinyliques et du styrène ainsi que des dérivés du styrène, les copolymérisats greffés et capsulés contenant de 1 à 99 % en poids de phase polymère b), par rapport au poids total des copolymérisats greffés et capsulés.

2. Copolymérisats greffés et capsulés selon la revendication 1, caractérisés en ce que la phase polymère a), contenant des groupements peroxydes, contient un ou plusieurs comonomères du groupe acétate de vinyle, acétate de 1-méthylvinyle, propionate de vinyle, laurate de vinyle, chlorure de vinyle et/ou éthylène et de 0,01 à 10 % en poids d'un ou de plusieurs composés peroxydes à deux insaturations oléfiniques de la formule
H₂C=CH-O-CO-(CH₂)ₙ-CO-O-O-CO-(CH₂)ₙ-CO-O-CH=CH₂
avec n = 1 à 8.

3. Copolymérisats greffés et capsulés selon la revendication 1 ou 2, caractérisés en ce que la phase polymère b) contient des esters (méth)acryliques d'alcools ayant de 1 à 10 atomes de C, des halogénures vinyliques, du styrène et/ou des dérivés du styrène.

4. Copolymérisats greffés et capsulés selon la revendication 1 à 3, caractérisés en ce que la phase polymère a), contenant des groupements peroxydes, contient de 0 à 50 % en poids d'éthylène, au moins 50 % en poids d'acétate de vinyle et de 0,01 à 5 % en poids de bis-(monovinyl-adipoyl)-peroxyde.

5. Copolymérisats greffés et capsulés selon la revendication 1 à 4, caractérisés en ce que la phase polymère b) contient du styrène ou du méthacrylate de méthyle.

6. Procédé de préparation des copolymérisats greffés et capsulés selon la revendication 1 à 5, caractérisé en ce que l'on fait réagir le polymérisat a), contenant des peroxydes, avec les monomères de la phase polymère b) en masse, en solution, en suspension ou en émulsion, à des températures ≥ 60°C, sans addition supplémentaire d'agents initiateurs.

7. Procédé selon la revendication 6, caractérisé en ce que la réaction est effectuée conformément au procédé de polymérisation en émulsion, avec addition de 0,1 à 5,0 % en poids d'un émulsifiant, par rapport au poids total du copolymérisat.

8. Copolymérisats, contenant des groupements peroxydes, d'un ou de plusieurs comonomères du groupe des esters (méth)acryliques d'alcools ayant de 1 à 10 atomes de C, des esters vinyliques d'acides carboxyliques aliphatiques saturés ayant de 2 à 10 atomes de C, des oléfines, des produits aromatiques vinyliques, des halogénures vinyliques et/ou des éthers vinyliques, avec des peroxydes de diacyle à deux insaturations oléfiniques de la formule 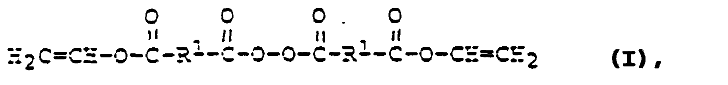 R₁ représentant une liaison chimique, ou un groupement alkylène linéaire ou ramifié ayant de 1 à 10 atomes de C, ou un groupement cycloalkylène ayant de 3 à 10 atomes de C, ou un résidu divalent d'un composé aromatique ayant de 6 à 14 atomes de C.

9. Copolymérisats contenant des groupements peroxydes selon la revendication 8, caractérisés en ce que R¹ représente une liaison chimique , un résidu alkylène (CH₂)ₙ avec n = 1 à 8, un résidu phényle ou un résidu CH=CH.

10. Copolymérisats, contenant des groupements peroxydes, selon la revendication 8 ou 9, caractérisés en ce qu'ils contiennent le bis- (monovinyl-adipoyl) -peroxyde en tant que peroxyde de diacyle à deux insaturations oléfiniques.

11. Copolymérisats contenant des groupements peroxydes, qui contiennent de 0 à 50 % en poids d'éthylène, au moins 50 % en poids d'acétate de vinyle et de 0,01 à 5 % en poids de bis-(monovinyl-adipoyl)peroxyde.

12. Procédé de préparation de copolymérisats, contenant des groupements peroxydes, selon la revendication 8 à 11, caractérisé en ce que la préparation se fait par une polymérisation en masse, en solution, en suspension ou en émulsion dans un domaine de température de 0 à 50°C.

13. Procédé selon la revendication 12, caractérisé en ce que la polymérisation se fait par une initiation radicalaire, le cas échéant, en présence d'un système initiateur oxydo-réducteur.

14. Utilisation des copolymérisats greffés et capsules selon la revendication 1 à 5, en tant que liants aqueux dans le secteur textile, dans les couleurs de dispersion et les enduits ainsi que dans les adhésifs.

15. Utilisation des copolymérisats greffés et capsulés selon la revendication 1 à 5 sous la forme de leurs solides en tant qu'agents modificateurs de la résilience d'impact dans les matières synthétiques, en tant qu'agents d'ajustement de phase dans le cas de mélanges de polymères, en tant qu'additifs "low profile" dans des résines de polyesters insaturés, et en tant qu'élastomères thermoplastiques.
